# EUROPEAN PATENT APPLICATION

(11) **EP 4 439 932 A1**
(43) Date of publication of application: **02.10.2024**
(21) Application number: 22898229.4
(22) Date of filing: 30.09.2022
(51) Int. Cl.: H02K 1/276

(54) **MOTOR**

(30) Priority: 25.11.2021 JP 2021191339
(71) Applicant: Minebea Mitsumi Inc., Kitasaku-gun, Nagano 3890293 (JP)
(72) Inventor: YAMADA, Takuji, Kitasaku-gun, Nagano 389-0293 (JP); TAMURA, Youko, Kitasaku-gun, Nagano 389-0293 (JP); MONJIYAMA, Ryu, Kitasaku-gun, Nagano 389-0293 (JP)
(74) Representative: Zabel, Julia Elisabeth
(86) International application number: PCT/JP2022/036706
(87) International publication number: WO 2023/095444

(57) **Abstract**

A motor (1) comprises a rotor (2), and a stator (10) that faces the rotor (2) in the radial direction. The rotor (2) comprises a yoke (24), magnets (40), and a resin part (60) that covers the yoke (24) and the magnets (40). The resin part (60) is positioned adjacent to the magnets (40) in the circumferential direction.

## Description

### Technical Field

The present invention relates to a motor.

### Background Art

Known motors include a mold motor with a rotor molded by a resin mold.

### Citation List

### Patent Literature

Patent Document 1: JP 2019-122190 A
Patent Document 2: JP 7-312852 A

### Summary of Invention

### Technical Problem

The temperature of a rotor rises due to frictional heat by rotation, heat transmitted from a coil of a stator, and the like. At that time, insufficient heat dissipation from the rotor causes motor efficiency to decrease due to the temperature rise.

One aspect is to provide a motor capable of suppressing decrease in motor efficiency.

### Solution to Problem

In one aspect, a motor includes a rotor and a stator opposing the rotor in a radial direction. The rotor includes a yoke, a magnet, and a resin part covering the yoke and the magnet. The resin part is disposed adjacent to the magnet in a circumferential direction.

One aspect can suppress decrease in motor efficiency.

### Brief Description of Drawings

FIG. 1 is a top perspective view illustrating an example of a molded rotor in an embodiment.
FIG. 2 is a top perspective view illustrating an example of a rotor in the embodiment before being covered with resin.
FIG. 3 is a side sectional view illustrating an example of a molded rotor in the embodiment.
FIG. 4 is another side sectional view illustrating an example of a molded rotor in the embodiment.
FIG. 5 is an enlarged upper face view illustrating an example of a rotor in the embodiment before being covered with resin.
FIG. 6 is a cross-sectional perspective view illustrating an example of a rotor in the embodiment.
FIG. 7 is an enlarged cross-sectional view illustrating an example of a molded rotor in the embodiment.
FIG. 8 is an enlarged cross-sectional view illustrating an example of a molded rotor in the embodiment.
FIG. 9 is another enlarged cross-sectional view illustrating an example of a molded rotor in the embodiment.
FIG. 10 is a bottom perspective view illustrating an example of a molded rotor in the embodiment.
FIG. 11 is a side sectional view illustrating an example of a motor in the embodiment.
FIG. 12 is a bottom perspective view illustrating an example of a molded rotor in a first modification.
FIG. 13 is a top perspective view illustrating an example of a molded rotor in the first modification.
FIG. 14 is a side sectional view illustrating an example of a motor in the first modification.
FIG. 15 is a top perspective view illustrating an example of a molded rotor in a second modification.
FIG. 16 is a top perspective view illustrating an example of a molded rotor in a third modification.
FIG. 17 is a top perspective view illustrating an example of a rotor in the third modification before being covered with resin.

### Description of Embodiments

An embodiment of a motor disclosed in the present invention will be described below in detail based on the drawings. The relationship between the dimensions of each element and the ratio of each element in the drawings may differ from reality. The drawings may include parts having different dimensional relationships and ratios. In the following description, for convenience, the axial direction illustrated is a direction with a shaft 19 described below extending. Of the axial directions, one is a first direction, and the other is a second direction. The radial direction illustrated is a radial direction orthogonal to the axial direction in the embodiment. The circumferential direction illustrated is a direction coinciding with a rotational direction of a motor 1 in the embodiment.

### Embodiment

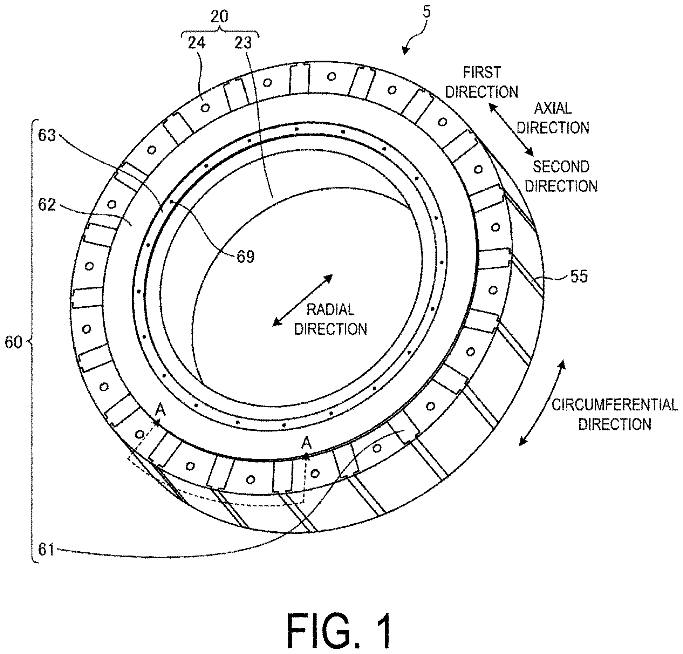

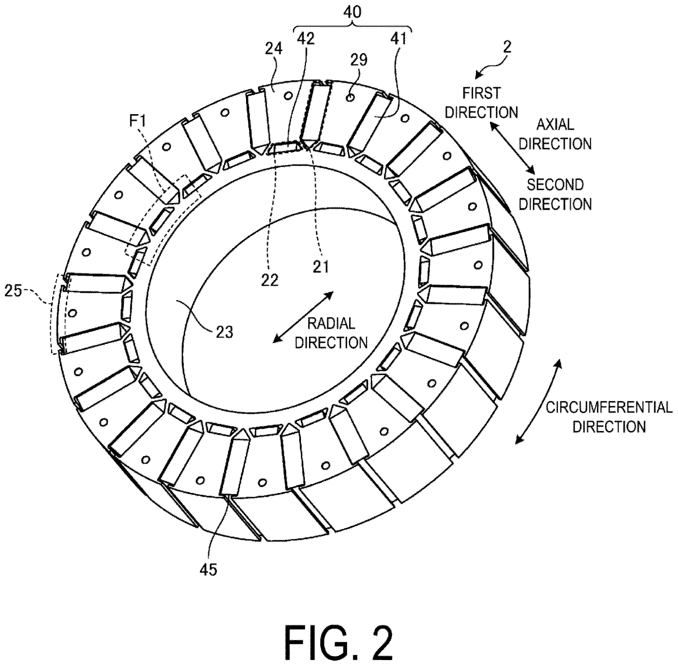

First, a motor in an embodiment will be described with reference to FIGS. 1 and 2. FIG. 1 is a top perspective view illustrating an example of a molded rotor in the embodiment. FIG. 2 is a top perspective view illustrating an example of a rotor in the embodiment before being covered with resin. In the following, the rotor covered with resin may be denoted as a molded rotor 5, and the rotor before being covered with resin may be denoted as a rotor 2.

The molded rotor 5 illustrated in FIG. 1 is formed by covering the rotor 2 illustrated in FIG. 2 with a resin member 60. The resin member 60 is formed, for example, by housing the rotor 2 with a magnet 40 in a mold, filling a liquid resin in the mold and curing the resin. In FIG. 1, the magnet 40 is covered with the resin member 60 and thus not visible.

In the embodiment, the resin forming the resin member 60 is a non-magnetic material or a soft magnetic material, and includes, for example, aluminum or silicon. The resin may be a thermosetting resin, or a thermoplastic resin may be used. The resin member 60 is an example of a resin part.

As illustrated in FIG. 2, the rotor 2 includes a rotor core 20 and a magnet 40. The rotor core 20 is constituted by laminating a plurality of plate-like cores composed of electromagnetic steel plates. The rotor core 20 includes an annular part 23 and a yoke 24 protruding outward from the annular part 23 in the radial direction. For example, a caulking part 29 for fitting the flat cores to each other is formed in the yoke 24.

The rotor core 20 includes a first hole 21 and a second hole 22. The first hole 21 is formed between the adjacent yokes 24 in the circumferential direction, and the second hole 22 is formed between the annular part 23 and the yoke 24 in the radial direction.

The magnet 40 is formed of, for example, a rare earth magnet such as a neodymium magnet. The magnet 40 may use a bond magnet or a sintered magnet.

In the embodiment, the magnet 40 include a first magnet 41 and a second magnet 42. As illustrated in FIG. 2, the first magnet 41 is arranged in the first hole 21 of the rotor core 20, and the second magnet 42 is disposed in the second hole 22 of the rotor core 20.

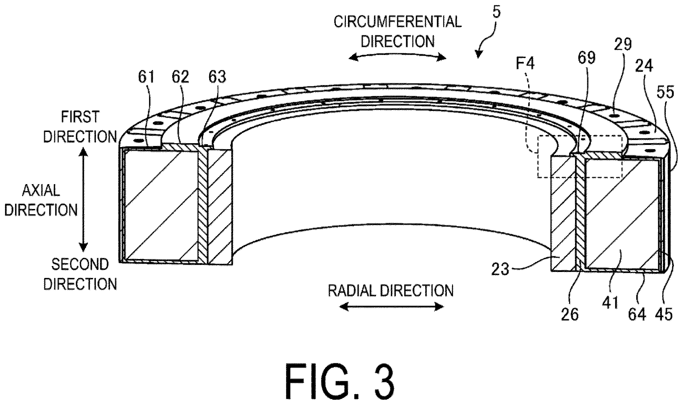

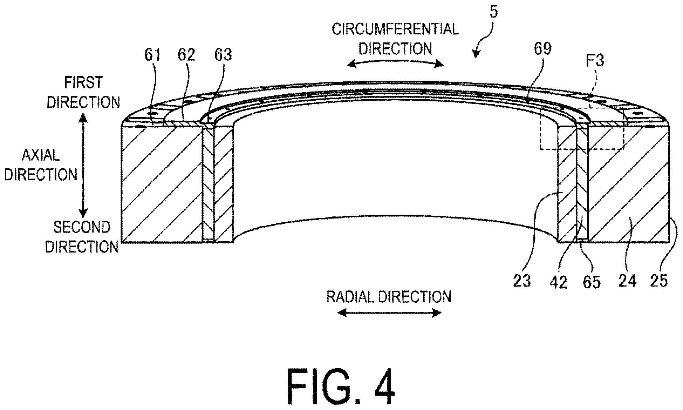

As illustrated in FIGS. 2 and 3, the first magnet 41 is formed in the radial direction in a long plate shape, and second magnet 42 is formed in the circumferential direction in a long plate shape as illustrated in FIGS. 2 and 4. FIG. 3 is a side sectional view illustrating an example of a molded rotor in the embodiment. FIG. 4 is another side sectional view illustrating an example of a molded rotor in the embodiment. As illustrated in FIGS. 3 and 4, the sizes in the axial direction of the first magnet 41 and the second magnet 42 are smaller than the sizes in the axial direction of the annular part 23 and the yoke 24 of the rotor core 20.

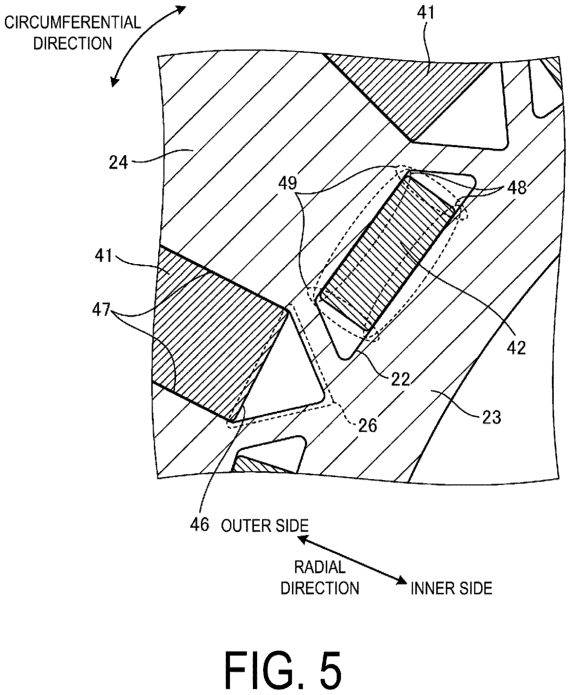

The first magnet 41 is shorter than the first hole 21 in the radial direction. In this case, as illustrated in FIGS. 2 and 3, an outer face 45 of the first magnet 41 in the radial direction is located further inside in the radial direction than an outer peripheral-side end face 25 of the yoke 24. In the first hole 21, a gap further inside than an inner end face 46 in the radial direction of the first magnet 41 constitutes a flux barrier 26 as illustrated in FIG. 5. FIG. 5 is an enlarged upper face view illustrating an example of a rotor in the embodiment before being covered with resin. FIG. 5 is an enlarged view of part illustrated in a frame F 1 of FIG. 2. The flux barrier 26 is to prevent the magnetic flux flowing into a stator 10 side from being reduced by the magnetic flux emitted from a magnetic pole of the magnet 40 of the rotor 2 flowing through the rotor 2. As illustrated in FIG. 5, the flux barrier 26 is formed at a position sandwiched between mutually adjacent second holes 22 in the circumferential direction.

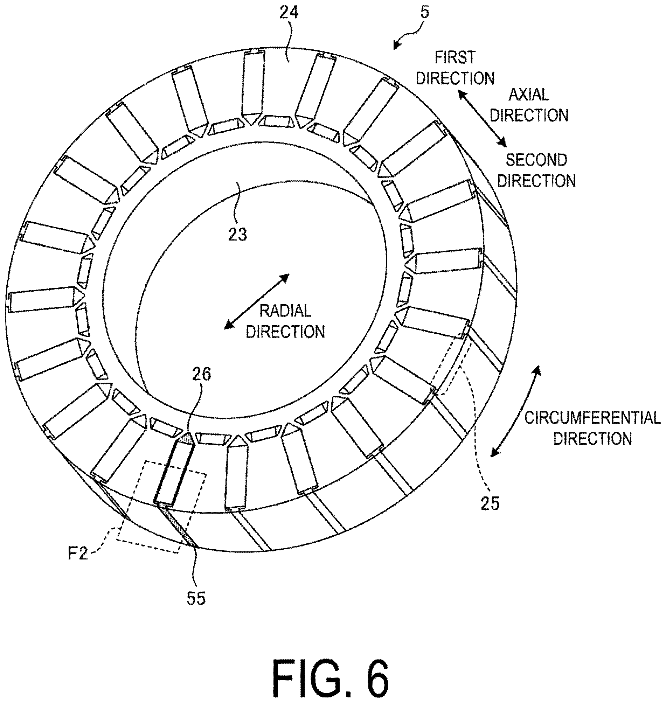

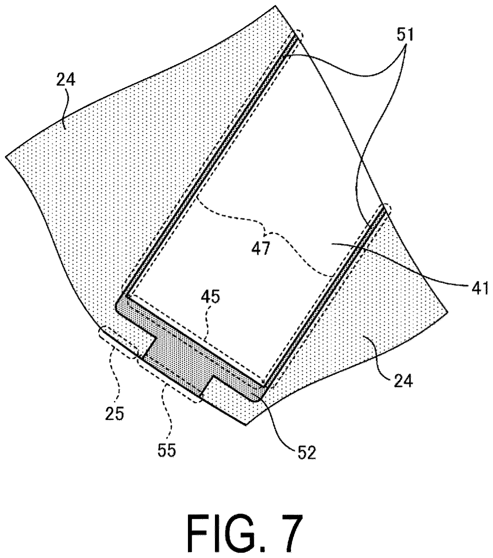

The molded rotor 5 is formed by filling the rotor 2 illustrated in FIG. 2 with resin from a first direction side in the axial direction inside the first hole 21 in the radial direction. In the embodiment, the resin member 60 is also formed at a position adjacent to the first magnet 41 and the second magnet 42 in the circumferential direction as illustrated in FIGS. 6 and 7. FIG. 6 is a cross-sectional perspective view illustrating an example of a rotor in the embodiment. FIG. 7 is an enlarged cross-sectional view illustrating an example of a molded rotor in the embodiment. FIG. 6 illustrates a cross section cut along a line A-A in FIG. 1. FIG. 7 is an enlarged view of part illustrated in a frame F2 in FIG. 6.

As illustrated in FIG. 7, a radial part 51 of the resin member 60 extends in the radial direction and is formed in the circumferential direction between a face 47 of the first magnet 41 and the yoke 24. That is, the radial part 51 of the resin member 60 is disposed circumferentially adjacent to first magnet 41, and the first magnet 41 opposes the yoke 24 in the circumferential direction with the radial part 51 sandwiched.

An outer face 45 in the radial direction of the first magnet 41 is covered with an outer peripheral part 52 of the resin member 60. On the other hand, the outer peripheral-side end face 25 of the yoke 24 of the rotor 2 is exposed without being covered with the resin member 60 as illustrated in FIGS. 6 and 7. In the embodiment, an outer face 55 in the radial direction of the outer peripheral part 52 is formed to be flush with the outer peripheral-side end face 25 of the yoke 24 of the rotor core 20 as illustrated in FIGS. 6 and 7. In other words, the outer face 55 in the radial direction and the outer peripheral-side end face 25 of the yoke 24 are formed continuously.

In the embodiment, the second hole 22 illustrated in FIG. 5 is also filled with resin. This causes, in addition to radial both end faces 48 of the second magnet 42 illustrated in FIG. 5, circumferential both end faces 49 of the second magnet 42 are also covered with the resin member 60.

As illustrated in FIG. 1, the molded rotor 5 includes in the embodiment a thin part 61, a step part 62, and a recess part 63 in the first axial direction. The thin part 61, the step part 62, and the recess part 63 are all formed in a substantially annular shape and are formed in a substantially concentric shape from outside toward inside in the radial direction.

The thin part 61 covers the first magnet 41 from the first direction side in the axial direction at the outer peripheral side of the rotor 2 in the radial direction. The thin part 61 does not cover the yoke 24 of the rotor 2 as illustrated in FIG. 1. That is, the yoke 24 is exposed to the first direction side in the axial direction.

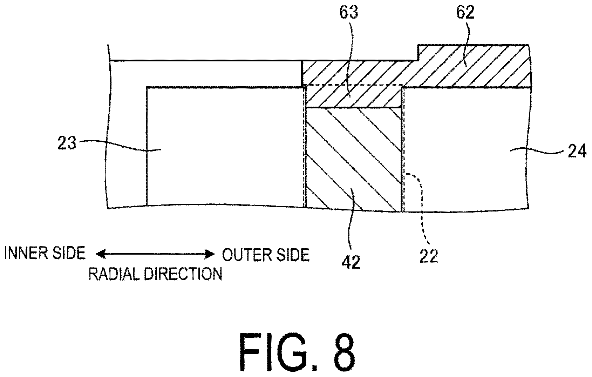

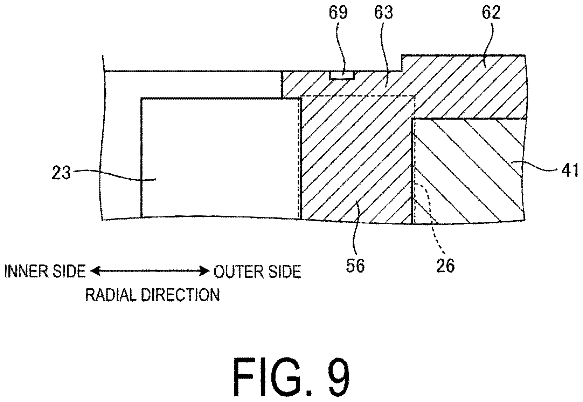

As illustrated in FIGS. 3 and 4, the recess part 63 protrudes toward the first direction side in the axial direction from the thin part 61. On the other hand, as illustrated in FIGS. 8 and 9, the end face at the first direction side in the axial direction of the recess part 63 is located further at the second direction side in the axial direction than the end face at the first direction side in the axial direction of the step part 62. FIG. 8 is an enlarged side cross-sectional view illustrating an example of a molded rotor in the embodiment. FIG. 9 is another enlarged side cross-sectional view illustrating an example of a molded rotor in the embodiment. FIG. 8 is an enlarged view of part illustrated in a frame F3 of FIG. 3, and FIG. 9 is an enlarged view of part illustrated in a frame F4 of FIG. 4.

As illustrated in FIGS. 8 and 9, the recess part 63 is disposed at a position opposing the flux barrier 26 and the second magnet 42 of the rotor core 20 in the axial direction. As illustrated in FIG. 2, injection traces 69 of resin forming the resin member 60 are formed in the recess part 63 at substantially equal intervals in the circumferential direction. In the embodiment, as illustrated in FIGS. 8 and 9, an injection trace 69 is formed at a position opposing the flux barrier 26 in the axial direction and is not formed at a position opposing the second magnet 42. In this case, the resin injected into the flux barrier 26 further forms an inner face part 56 as illustrated in FIG. 9.

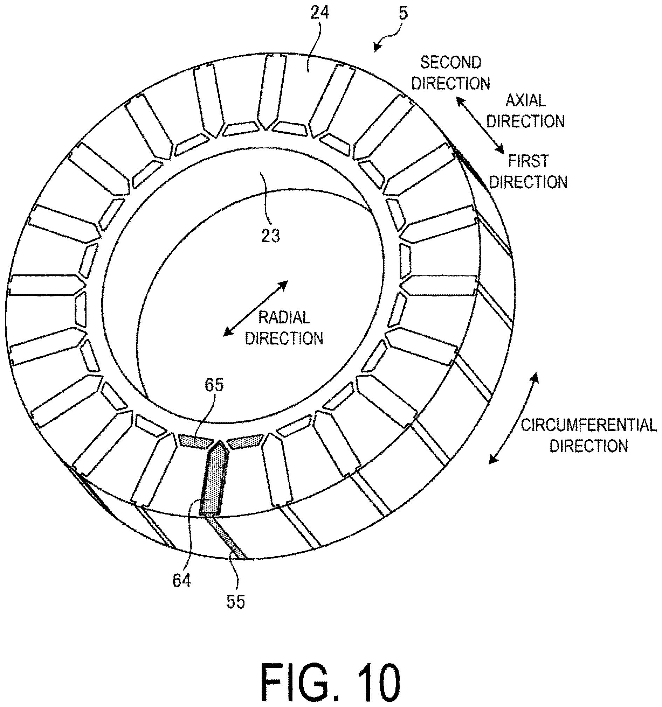

In the molded rotor 5, the second direction side in the axial directions of the first magnet 41 and the second magnet 42 are also each covered with the resin member 60 as illustrated in FIG. 10. FIG. 10 is a bottom perspective view illustrating an example of a molded rotor in the embodiment. As illustrated in FIG. 10, the first magnet 41 is covered with a first lower face part 64 of the resin member 60 from the second direction side in the axial direction, and the second magnet 42 is covered with a second lower face part 65 of the resin member 60 from the second direction side in the axial direction. In the embodiment, the thickness (size in the axial direction) of the first lower face part 64 and the second lower face part 65 is substantially the same as the thickness of the thin part 61. On the other hand, as illustrated in FIG. 10, the yoke 24 is exposed to the second direction side in the axial direction without being covered with the resin member 60.

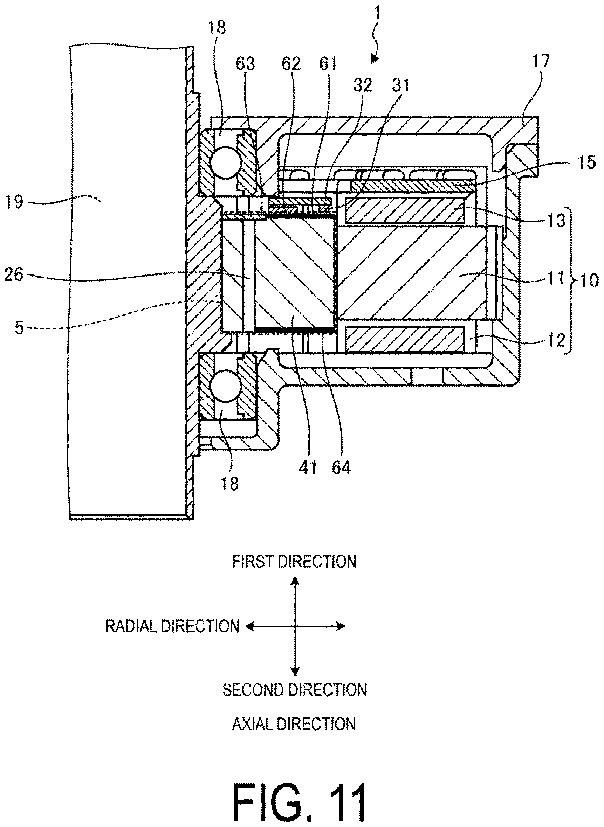

The molded rotor 5 in the embodiment is mounted at the motor 1 illustrated in FIG. 11, for example. FIG. 11 is a side sectional view illustrating an example of a motor in the embodiment. As illustrated in FIG. 11, the motor 1 in the embodiment is a so-called inner rotor type motor with the stator 10 disposed in the radial direction outside the molded rotor 5.

As illustrated in FIG. 11, the stator 10 includes a stator core 11, an insulator 12, and a coil 13. A substrate 15 is further mounted at the stator 10. In the motor 1, the molded rotor 5 is rotatably supported at the shaft 19 via a bearing 18. The motor 1 is accommodated in a housing 17.

As illustrated in FIG. 11, the motor 1 further includes a sensor 31. The sensor 31 detects, for example, the magnetic flux of the first magnet 41 of the molded rotor 5, thereby detecting the rotation speed, rotation angle, or the like of the molded rotor 5. The sensor 31 is supported, for example, by a sensor holder 32 fixed to the housing 17.

The sensor 31 disposed at the first direction side in the axial direction opposes the molded rotor 5 and disposed apart in the axial direction from the molded rotor 5 disposed at the second direction side in the axial direction. In the embodiment, the molded rotor 5 is disposed so that the thin part 61, the step part 62, and the recess part 63 are disposed at the first direction side in the axial direction. In this case, the sensor 31 and the first magnet 41 of the molded rotor 5 oppose each other via the thin part 61.

The end face at the first direction side in the axial direction of the thin part 61 is located further at the second direction side in the axial direction than the end face at the first direction side in the axial direction of the step part 62. This can reduce the distance between the sensor 31 and the molded rotor 5 and improve detection accuracy of the sensor 31. Reducing the thickness (size in the axial direction) of the thin part 61 allows the decrease in the detection accuracy due to the weakening of the magnetic flux to be suppressed.

As described above, the motor 1 in the embodiment includes the rotor 2, and the stator 10 opposing the rotor 2 in the radial direction. The rotor 2 includes the yoke 24, the magnet 41, and the resin member 60 covering the yoke 24 and the magnet 41. In the circumferential direction, the resin member 60 is disposed adjacent to the magnet 41. Such a configuration enables a surface area of the resin member 60 in contact with the magnet 41 to be increased, thereby the stability of the magnet 41 can be improved and the heat dissipation from the rotor 2 can be improved to suppress the decrease in the motor efficiency.

### Modifications

Although the structure of the embodiment has been described above, embodiments are not limited to this structure. For example, the motor 1 in the embodiment is an inner rotor type motor, but not limited to this type, may be an outer rotor type motor. The motor in the embodiment is a so-called flat motor with a length in the radial direction larger than a length in the axial direction but not limited to the flat motor, and the length of the motor in the axial direction may be larger than a length in the radial direction. Regardless of the length of the motor in the axial direction, the length of the magnet in the axial direction is preferably smaller than the length of the yoke in the axial direction.

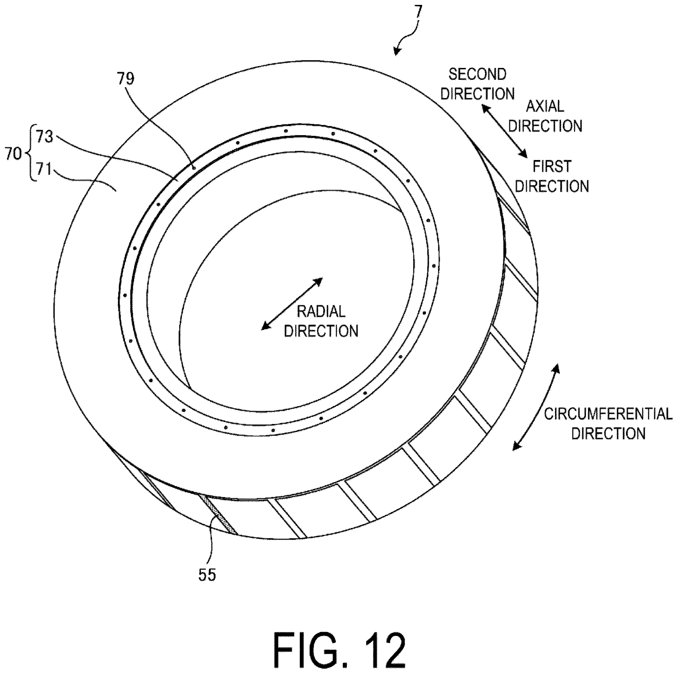

The shape of the resin member formed at the rotor 2 is also not limited to the shape illustrated in the embodiment. FIG. 12 is a bottom perspective view illustrating an example of a molded rotor in a first modification. In each of the following modifications, the same parts as the parts illustrated in the previously described drawings are denoted by the same signs, and overlapping descriptions are omitted.

As illustrated in FIG. 12, a recess part 73 is formed at the face of a molded rotor 7 at the second direction side in the axial direction in the first modification, and an injection trace 79 is formed in the recess part 73. The shapes of the recess part 73 and the injection trace 79 are substantially the same as the shapes of the recess part 63 and the injection trace 69 formed at the first direction side in the axial direction of the molded rotor 5 illustrated in FIG. 1.

On the face of the molded rotor 7 at the second direction side in the axial direction, not only the first magnet 41 but also the yoke 24 of the rotor 2 at the part in the radial direction outside the recess part 73 are covered with a first lower face part 71. In the first modification, the thickness (size in the axial direction) of the first lower face part 71 of the molded rotor 7 is larger than the thickness of the thin part 61 of the molded rotor 5 in the embodiment.

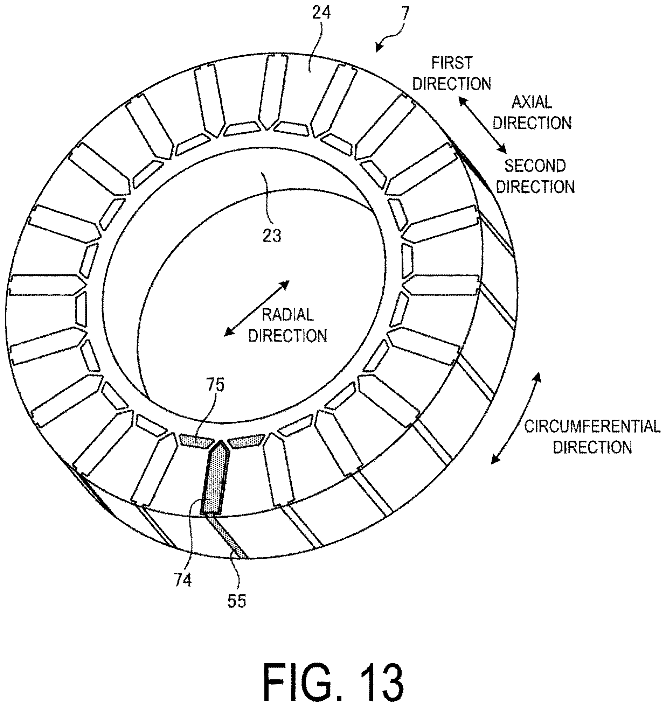

In the first modification, as illustrated in FIG. 13, the face of the molded rotor 7 at the first direction side in the axial direction is substantially the same as the face of the molded rotor 5 at the second direction side in the axial direction illustrated in FIG. 10. FIG. 13 is a top perspective view illustrating an example of the molded rotor in the first modification. In FIG. 13, representation of the caulking part 29 illustrated in FIGS. 1 and 2 is omitted.

As illustrated in FIG. 13, in the molded rotor 7, the first magnet 41 is covered with a first upper face part 74 of a resin member 70 from the first direction side in the axial direction, and the second magnet 42 is covered with a second upper face part 75 of the resin member 70 from the first direction side in the axial direction. In the first modification, no portion corresponding to the step part 62 is formed at either the first direction side in the axial direction or the second direction side in the axial direction.

In the first modification, the thicknesses (size in the axial direction) of the first upper face part 74 and the second upper face part 75 are each smaller than the thickness of the first lower face part 71. For example, the thickness of the first upper face part 74 is substantially the same as the thickness of the thin part 61 of the molded rotor 5.

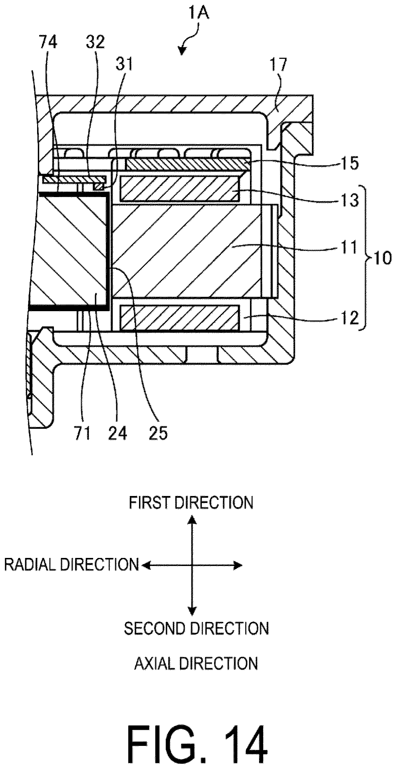

FIG. 14 is a side sectional view illustrating an example of a motor in the first modification. A motor 1A in the first modification includes the molded rotor 7 instead of the molded rotor 5. In FIG. 14, the bearing 18 and the shaft 19, or the like are omitted for illustration.

In the first modification, the sensor 31 in the axial direction opposes the first upper face part 74 of the molded rotor 7. That is, the sensor 31 opposes the first magnet 41 of the molded rotor 7 via the first upper face part 74.

Also in the first modification, the first upper face part 74 has a small thickness (size in the axial direction), allowing the decrease in detection accuracy to be suppressed as in the embodiment. The structure has been described with the thickness of the first upper face part 74 and the thickness of the first lower face part 71 substantially the same. However, not limited to this structure, the thickness of the first lower face part 71 may be larger than the thickness of the first upper face part 74. Also in such a configuration, the first upper face part 74 has a small thickness, allowing the decrease in detection accuracy to be suppressed.

As described above, the molded rotor 7 in the first modification, the end face of the second direction side in the axial direction of the yoke 24 in addition to the end faces of the second direction side in the axial directions of the first magnet 41 and the second magnet 42 are covered with the resin member 70. Such a configuration allows the surface area of the resin member 70 to be increased, thereby improving heat dissipation from the rotor 2. Also in the first modification, the first upper face part 74 opposing the sensor 31 in the axial direction has a small thickness, allowing the decrease in detection accuracy of the sensor 31 to be suppressed.

The embodiment may have, by vertically inverting and arranging the molded rotor 5 at the motor 1, a configuration of the first lower face part 64 of the molded rotor 5 opposing the sensor 31 disposed at the first direction side. Also in such a configuration, the first lower face part 64 has a small thickness (size in the axial direction), allowing a decrease in the detection accuracy of the sensor 31 to be suppressed.

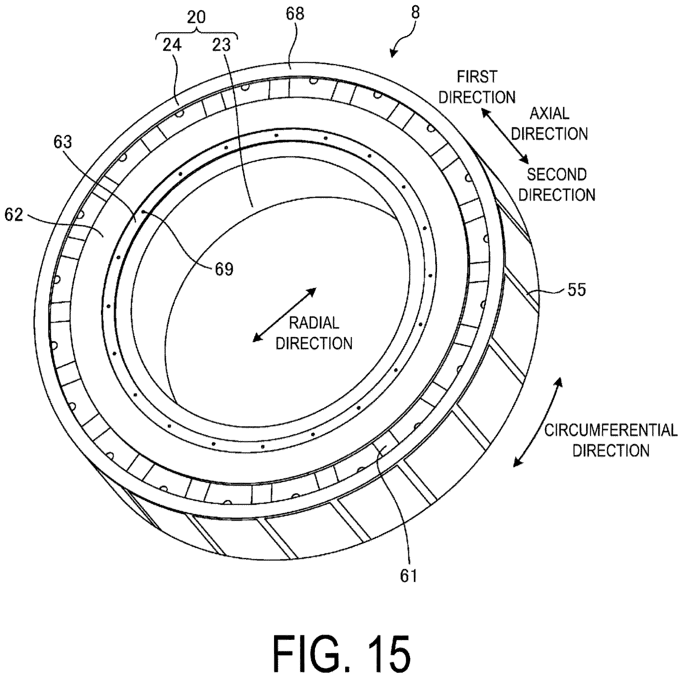

As illustrated in FIG. 15, the face of the rotor 2 at the first direction side in the axial direction in addition to the thin part 61, the step part 62, and the recess part 63 may be further covered with other resin members. For example, the molded rotor may include an additional resin member. FIG. 15 is a top perspective view illustrating an example of a molded rotor in a second modification. A molded rotor 8 illustrated in FIG. 15 further includes a ring part 68 formed of resin at the outer peripheral portion of the face at the first direction side of the molded rotor 5 in the embodiment. The ring part 68 may be integrally formed with the resin member 60 such as the thin part 61, or may be formed as a separate member and attached to the rotor core 20.

In this configuration, the heat dissipation efficiency can be further improved by increasing the surface area of the resin member at the molded rotor as compared with the embodiment. The ring part 68 does not interfere with the flow of magnetic flux between the sensor 31 and the first magnet 41 even when the molded rotor 8 is mounted at the motor 1 as illustrated in FIG. 11, allowing the decrease in detection accuracy to be suppressed. The ring part 68 may be provided at the face of the molded rotor 8 at the second direction side, for example.

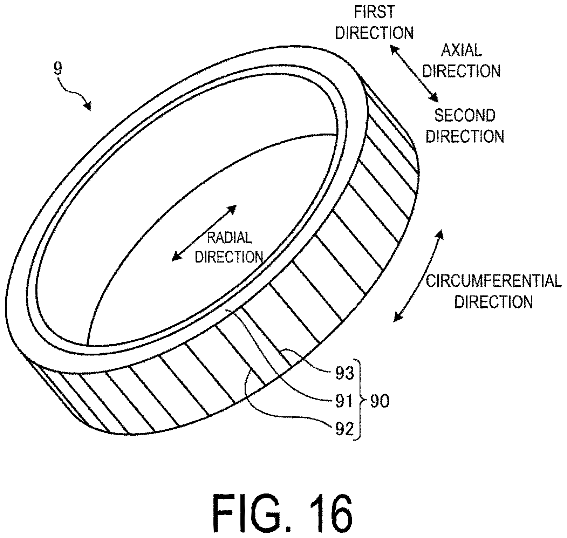

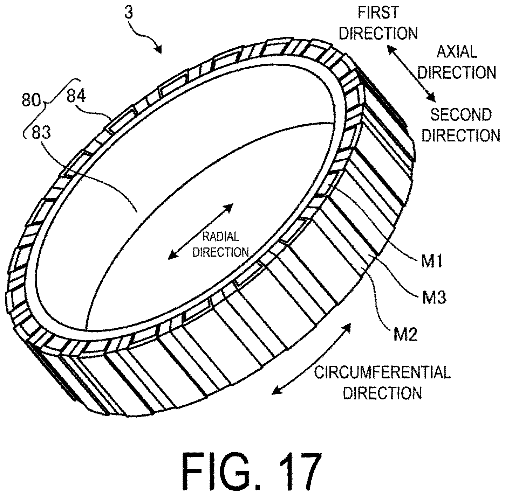

Further, in the Halbach array rotor illustrated in FIGS. 16 and 17, a resin member may be disposed at the circumferential side of the magnet as in the embodiment. FIG. 16 is a top perspective view illustrating an example of a molded rotor in a third modification. FIG. 17 is a top perspective view illustrating an example of a rotor in the third modification before being covered with resin. A rotor 3 in the third modification includes a rotor core 80, a first magnet M1, a second magnet M2, and a third magnet M3. The first magnet M1 is disposed between a yoke 84 and an annular part 83 of the rotor core 80 in the radial direction. The second magnet M2 and the third magnet M3 are disposed between two yokes 84 adjacent in the circumferential direction.

As illustrated in FIG. 17, the rotor 3 of the third modification disposes the first magnet M1, and the second magnet M2, and the third magnet M3 adjacent to each other in the circumferential direction. In this case, as illustrated in FIG. 16, a first radial part 92 of a resin member 90 at a molded rotor 9 is formed between the second magnet M2 and the yoke 84 in the circumferential direction. Similarly, a second radial part 93 of the resin member 90 is formed between the third magnet M3 and the yoke 84 in the circumferential direction. The resin member 90 may be formed in a gap between the second magnet M2 and the third magnet M3 in the circumferential direction. The outer faces in the radial direction of the second magnet M2 and the third magnet M3 are covered with the resin member 90.

The yoke 84 and the annular part 83 and the end faces at the first direction side in the axial direction of the first magnet M1, the second magnet M2, and the third magnet M3 are covered with a resin part 91. This allows the decrease in motor efficiency to be suppressed by improving the heat dissipation from the molded rotor 9.

Furthermore, the material of yoke illustrated in the embodiment and each modification is not limited to iron and may be any other magnetic body.

The rotor or stator described in the embodiment and each modification of the present invention may be mounted at actuators, electronic devices, or the like. Specifically, the rotor or stator described in the embodiment and each modification of the present invention may be accommodated in the frame, housing, body, or the like, of the actuators and electronic devices, and may be used as a driving element of the actuators and electronic devices.

Although the present invention has been described above on the basis of the embodiment and each modification, the present invention is not limited to embodiment and each modification, and it is needless to say that various variations can be made without departing from the gist of the present invention. Various variations without departing from such gist are also included in the technical scope of the present invention, and this is apparent to those skilled in the art from the description of the claims.

### Reference Signs List

1, 1A Motor; 2, 3 Rotor; 5, 7, 8, 9 Molded rotor; 10 Stator; 11 Stator core; 12 Insulator; 13 Coil; 15 Substrate; 17 Housing; 18 Bearing; 19 Shaft; 20, 80 Rotor core; 21 First hole; 22 Second hole; 23, 83 Annular part; 24, 84 Yoke; 25 Outer peripheral-side end face; 26 Flux barrier; 29 Caulking part; 31 Sensor; 32 Sensor holder; 40 Magnet; 41, M1 First magnet; 42, M2 Second magnet; M3 Third magnet; 51 Radial part; 52 Outer peripheral part; 55 Outer face; 56 Inner face part; 60, 70, 90 Resin member; 61 Thin part; 62 Step part; 63, 73 Recess part; 64, 71 First lower face part; 65 Second lower face part; 68 Ring part; 69, 79 Injection trace; 74 First upper face part; 75 Second upper face part; 92 First radial part; 93 Second radial part

## Claims

1. A motor, comprising:
a rotor; and
a stator opposing the rotor in a radial direction,
the rotor including:
a yoke;
a magnet; and
a resin part covering the yoke and the magnet, wherein
the resin part is disposed adjacent to the magnet in a circumferential direction.

2. The motor according to claim 1, wherein the resin part includes aluminum or silicon.

3. The motor according to claim 2, wherein the resin part is a non-magnetic material or a soft magnetic material.

4. The motor according to claim 2 or 3, wherein
the stator is disposed at an outer peripheral side of the rotor in the radial direction,
the yoke includes an outer peripheral surface opposing the stator, and
the outer peripheral surface is exposed with respect to the resin part.

5. The motor according to claim 4, wherein
the magnet includes a magnet outer peripheral surface opposing the stator, and
the resin part covers the magnet outer peripheral surface.

6. The motor according to any one of claims 2 to 5, wherein
the resin part includes, in a face at one side in an axial direction, a recess part recessed toward the other side in the axial direction, and
the recess part forms an injection trace of the resin forming the resin part.

7. The motor according to any one of claims 1 to 6, comprising
a sensor configured to detect a magnetic flux, wherein
the resin part includes a step part in one face at one side in the axial direction, and includes a thin part having a thickness in an axial direction of the resin part at an outer peripheral side from the step part smaller than a thickness in the axial direction of the resin part at an inner peripheral side from the step part, the resin part at an outer peripheral side and the resin part at an inner peripheral side being disposed at one side of the magnet in the axial direction, and
the sensor opposes the thin part in the axial direction.

8. The motor according to any one of claims 1 to 7, comprising
a sensor configured to detect a magnetic flux, wherein
a thickness in an axial direction of the resin part disposed at the other side of the magnet in the axial direction is smaller than a thickness in the axial direction of the resin part disposed at one side of the magnet in the axial direction, and
the sensor opposes the magnet via the resin part at the other side in the axial direction.

9. The motor according to any one of claims 1 to 8, wherein
the rotor includes an annular part formed at an inner circumferential side of the yoke in the radial direction and a second magnet,
the second magnet is disposed between the annular part and the yoke,
the magnet is disposed between the annular part and the stator,
the resin part covers the magnet, the second magnet, and the yoke from both directions in the axial direction,
the magnet opposes the stator via the resin part in the radial direction,
a flux barrier is formed at an inner side in the radial direction of the magnet, and
the second magnet opposes the yoke and the annular part via the resin part in the radial direction and opposes the flux barrier via the resin part at both sides in the circumferential direction.
